# EUROPEAN PATENT APPLICATION

(11) **EP 4 530 801 A1**
(43) Date of publication of application: **02.04.2025**
(21) Application number: 24191749.1
(22) Date of filing: 30.07.2024
(51) Int. Cl.: G06F 3/01

(54) **AUTOMATIC BOUNDARY FOR AN ARTIFICIAL REALITY ENVIRONMENT**

(30) Priority: 26.09.2023 US 202363585360 P; 12.07.2024 US 202418771009
(71) Applicant: Meta Platforms Technologies, LLC, Menlo Park, CA 94025 (US)
(72) Inventor: Nitzan, Asaf, Menlo Park (US); Harvey, Ariana Yu-Chia, Menlo Park (US); Ou, Jasmine, Menlo Park (US); Wu, Ting Ting, Menlo Park (US); Tanner, Christopher Richard, Menlo Park (US); Niu, Muqing, Menlo Park (US); Ju, Peter, Menlo Park (US); Leung, Eric, Menlo Park (US); Valori, James Alexander, Menlo Park (US); Castillo, Michael, Menlo Park (US); Perry, Adi, Menlo Park (US); Klarman, Dan, Menlo Park (US); Yelin, Einav Namer, Menlo Park (US); Basat, Tal Haim Ben, Menlo Park (US); Guedj, Jeremie, Menlo Park (US); Lerner, Alon, Menlo Mark (US); Shivaiah, Savitha Yalanadu, Menlo Park (US)
(74) Representative: Murgitroyd & Company

(57) **Abstract**

For artificial reality (XR) applications that need a guardian, aspects of the present disclosure can automatically determine where boundaries should be set in the real-world environment. Using a machine learning model, the automatic boundary system can detect the floor plane, then generate a height map of the real-world environment with the floor at zero. The height map can include positive heights (e.g., objects on the floor) and negative heights (e.g., downward leading stairs). The automatic boundary system can then generate a boundary for the area based on the detected heights by: applying thresholds to disregard objects at certain heights, applying thresholds to disregard open areas at certain widths, excluding oddly shaped areas that would constantly trigger the boundary if the user were nearby, etc. The user can further manually adjust the generated boundary in both directions (e.g., bringing it closer or further from the user).

## Description

### CROSS-REFERENCE TO RELATED APPLICATIONS

This application claims priority to U.S. Provisional Application No. 63/585,360, filed September 26, 2024, titled "Automatic Boundary for an Artificial Reality Environment," which is herein incorporated by reference in its entirety.

### TECHNICAL FIELD

The present disclosure is directed to generating an automatic boundary for an artificial reality (XR) environment provided by an XR system.

### BACKGROUND

Artificial reality (XR) devices are becoming more prevalent. As they become more popular, the applications implemented on such devices are becoming more sophisticated. Mixed reality (MR) and augmented reality (AR) applications can provide interactive three-dimensional (3D) experiences that combine images of the real-world with virtual objects, while virtual reality (VR) applications can provide an entirely self-contained 3D computer environment. For example, an MR or AR application can be used to superimpose virtual objects over a real scene that is observed by a camera. A real-world user in the scene can then make gestures captured by the camera that can provide interactivity between the real-world user and the virtual objects. AR, MR, and VR (together XR) experiences can be observed by a user through a head-mounted display (HMD), such as glasses or a headset. An HMD can have a pass-through display, which allows light from the real-world to pass through a lens to combine with light from a waveguide that simultaneously emits light from a projector in the HMD, allowing the HMD to present virtual objects intermixed with real objects the user can actually see.

Aspects of the present disclosure are directed to providing an automatic boundary (used interchangeably herein with the term "guardian") for an artificial reality (XR) environment. As used herein, a "guardian" can be a defined XR usage space in a real-world environment. If a user, wearing an XR system, crosses the boundary when accessing an XR experience, one or more system actions or restrictions can be triggered on the XR system.

### SUMMARY OF INVENTION

In a first aspect of the invention, a method for providing an automatic boundary for an artificial reality environment provided by an artificial reality system, the method comprising: determining a floor plane in a real-world environment; generating a height map for the real-world environment by detecting multiple heights corresponding to multiple physical objects in the real-world environment, the multiple heights being detected relative to the floor plane; and automatically generating the boundary for the artificial reality environment by: determining a consecutive floor area by determining an enclosed area of the floor plane in which a threshold amount of the multiple heights, in the enclosed area, are at a height of the floor plane; identifying one or more areas of the consecutive floor area having a dimension below a threshold and modifying the consecutive floor area to exclude the one or more identified areas; and optionally further scaling the modified consecutive floor area down by a predetermined amount; and/ or carving one or more portions out of the scaled consecutive floor area, where the scaled consecutive floor area encloses one or more detected heights, of the multiple detected heights, that are above a threshold, such that the carved consecutive floor area does not enclose any heights above the threshold; and determining the boundary, for the artificial reality environment, as the carved consecutive floor area.

In some embodiments, generating the height map includes collapsing, in the height map, one or more heights, that are below a first threshold distance of the floor plane, to the floor plane.

In some embodiments, generating the height map includes excluding one or more heights, that are a second threshold distance above the floor plane, from the height map.

In some embodiments, the method further comprises rendering the artificial reality environment, on the artificial reality system, relative to the boundary.

In some embodiments, the floor plane is determined by applying a machine learning model to one or more images of the real-world environment.

In some embodiments, determining the consecutive floor area excludes areas that have one or more positive heights relative to the floor plane and excludes areas that have one or more negative heights relative to the floor plane.

In some embodiments, the method further comprises displaying, by the artificial reality system, the boundary overlaid on a view of the real-world environment; and receiving input, via the artificial reality system, to apply a manual adjustment to the boundary.

In some embodiments, the manual adjustment is to move the boundary closer to the artificial reality system or to move the boundary away from the artificial reality system.

In some embodiments, the threshold amount of the multiple heights in the enclosed area is all of the multiple heights in the enclosed area.

In a second aspect of the invention, a computer-readable storage medium is provided storing instructions for providing an automatic boundary for an artificial reality environment provided by an artificial reality system, the instructions, when executed by a computing system, cause the computing system to: determine a floor plane in a real-world environment; generate a height map for the real-world environment by detecting multiple heights corresponding to multiple physical objects in the real-world environment, the multiple heights being detected relative to the floor plane; and automatically generate the boundary for the artificial reality environment by: determining a consecutive floor area by determining an enclosed area of the floor plane in which a threshold amount of the multiple heights, in the enclosed area, are within a threshold height of the floor plane; identifying one or more areas of the consecutive floor area having a dimension below a threshold and modifying the consecutive floor area to exclude the one or more identified areas; and determining the boundary, for the artificial reality environment, as the modified consecutive floor area.

For example, a computer-readable storage medium is provided storing instructions for providing an automatic boundary for an artificial reality environment provided by an artificial reality system, the instructions, when executed by a computing system, cause the computing system to perform the method of the first aspect of the invention.

In some embodiments, automatically generating the boundary further comprises scaling the modified consecutive floor area down by a predetermined amount, wherein the boundary is determined as the modified and scaled consecutive floor area.

In some embodiments, automatically generating the boundary further comprises carving one or more portions out of the modified consecutive floor area where the modified consecutive floor area encloses one or more detected heights, of the multiple detected heights, that are above a threshold, such that the carved consecutive floor area does not enclose any heights above the threshold; and the boundary is determined as the modified and carved consecutive floor area.

In some embodiments, generating the height map includes collapsing, in the height map, one or more heights, that are below a first threshold distance of the floor plane, to the floor plane.

In some embodiments, generating the height map includes excluding one or more heights, that are a second threshold distance above the floor plane, from the height map.

In some embodiments, the floor plane is determined by applying a machine learning model to one or more images of the real-world environment.

In some embodiments, the determining the consecutive floor area excludes areas that have one or more positive heights relative to the floor plane and excludes areas that have one or more negative heights relative to the floor plane.

In a third aspect of the invention, a computing system for providing an automatic boundary for an artificial reality environment provided by an artificial reality system is disclosed, the computing system comprising:
one or more processors, and
one or more memories storing instructions that, when executed by the one or more processors, cause the computing system to: determine a floor plane in a real-world environment; generate a height map for the real-world environment by detecting multiple heights corresponding to multiple physical objects in the real-world environment, the multiple heights being detected relative to the floor plane; and automatically generate the boundary for the artificial reality environment by: determining a consecutive floor area by determining an enclosed area of the floor plane in which a threshold amount of the multiple heights, in the enclosed area, are within a threshold height of the floor plane; identifying one or more areas of the consecutive floor area having a dimension below a threshold and modifying the consecutive floor area to exclude the one or more identified areas; and determining the boundary, for the artificial reality environment, as the modified consecutive floor area.

For example, the system is a system configured to perform the method of the first aspect of the invention, in that, for example the computer-readable storage medium is provided storing instructions that, when executed by the computing system, cause the computing system to perform the method of the first aspect of the invention.

In some embodiments, automatically generating the boundary further comprises: scaling the modified consecutive floor area down by a predetermined amount; and carving one or more portions out of the scaled consecutive floor area where the scaled consecutive floor area encloses one or more detected heights, of the multiple detected heights, that are above a threshold, such that the carved consecutive floor area does not enclose any heights above the threshold, wherein the boundary is determined as the modified, scale, and carved consecutive floor area.

In some embodiments, the instructions, when executed by the one or more processors, further cause the computing system to display, by the artificial reality system, the boundary overlaid on a view of the real-world environment; and receive input, via the artificial reality system, to apply a manual adjustment to the boundary.

In some embodiments, the manual adjustment is to move the boundary closer to the artificial reality system or to move the boundary away from the artificial reality system.

Preferred features of the various aspects of the example embodiments herein will be understood to be applicable by analogy to other aspects except where indicated to the contrary or technically infeasible.

### BRIEF DESCRIPTION OF THE DRAWINGS

Figure 1 is a block diagram illustrating an overview of devices on which some implementations of the present technology can operate.
Figure 2A is a wire diagram illustrating a virtual reality headset which can be used in some implementations of the present technology.
Figure 2B is a wire diagram illustrating a mixed reality headset which can be used in some implementations of the present technology.
Figure 2C is a wire diagram illustrating controllers which, in some implementations, a user can hold in one or both hands to interact with an artificial reality environment.
Figure 3 is a block diagram illustrating an overview of an environment in which some implementations of the present technology can operate.
Figure 4 is a block diagram illustrating components which, in some implementations, can be used in a system employing the disclosed technology.
Figure 5 is a flow diagram illustrating a process used in some implementations of the present technology for providing an automatic boundary for an artificial reality (XR) environment provided by an XR system.
Figure 6 is a conceptual diagram illustrating an example perspective view of a determined floor plane in a real-world environment.
Figure 7A is a conceptual diagram illustrating an example overhead view of a height map corresponding to a real-world environment.
Figure 7B is a conceptual diagram illustrating an example overhead view of a determined consecutive floor area corresponding to a real-world environment.
Figure 7C is a conceptual diagram illustrating an example overhead view of a modified consecutive floor area corresponding to a real-world environment.
Figure 7D is a conceptual diagram illustrating an example overhead view of a scaled consecutive floor area corresponding to a real-world environment.
Figure 7E is a conceptual diagram illustrating an example overhead view of a carved consecutive floor area corresponding to a real-world environment.
Figure 7F is a conceptual diagram illustrating an example overhead view of a consecutive floor plane corresponding to a boundary for an artificial reality (XR) environment.

The techniques introduced here may be better understood by referring to the following Detailed Description in conjunction with the accompanying drawings, in which like reference numerals indicate identical or functionally similar elements.

### DETAILED DESCRIPTION

Aspects of the present disclosure are directed to providing an automatic boundary (used interchangeably herein with the term "guardian") for an artificial reality (XR) environment. As used herein, a "guardian" can be a defined XR usage space in a real-world environment. If a user, wearing an XR system, crosses the boundary when accessing an XR experience, one or more system actions or restrictions can be triggered on the XR system. For example, the XR system can display a warning message on the XR system, can activate at least partial pass-through on the XR system, can display the boundary on the XR system, can pause rendering of or updates to the XR environment, etc., as described further herein.

The automatic boundary system described herein can automatically determine where boundaries should be set in the user's real-world environment, e.g., for XR applications that need a guardian. Using one or more machine learning models, for example, the automatic boundary system can detect the floor plane and generate a height map corresponding to the real-world environment with the floor plane at zero. The height map can include positive heights (e.g., objects on the floor) and negative heights (e.g., objects below the floor, such as downward leading stairs). The automatic boundary system can determine where the user is in relation to the detected heights and generate a boundary for the area relative to the user based on the detected heights.

In generating the boundary, the automatic boundary system can apply thresholds to disregard objects at certain heights, such as above 2 meters (which could be, e.g., a low hanging lamp) or under 15 centimeters (e.g., carpeting or rugs). The automatic boundary system can "flood fill" an enclosed area at the floor plane to determine a consecutive floor area. The automatic boundary system can further apply thresholds to disregard open areas at certain widths, such as under 1 meter; thus, oddly shaped areas can be removed that would constantly trigger the boundary if the user were nearby. In some implementations, the automatic boundary system can further carve out areas of the height map above a threshold (e.g., a coffee table) that are enclosed (i.e., surrounded) by the consecutive floor area, such that "islands" of excluded heights are no longer surrounded. In some implementations, the user can further manually adjust the generated boundary in both directions (e.g., bringing it closer or further from the user). Thus, the automatic boundary system can reduce the friction of spatial setup in XR by creating a safety boundary automatically for the user.

Embodiments of the disclosed technology may include or be implemented in conjunction with an artificial reality system. Artificial reality or extra reality (XR) is a form of reality that has been adjusted in some manner before presentation to a user, which may include, e.g., virtual reality (VR), augmented reality (AR), mixed reality (MR), hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, a "cave" environment or other projection system, or any other hardware platform capable of providing artificial reality content to one or more viewers.

"Virtual reality" or "VR," as used herein, refers to an immersive experience where a user's visual input is controlled by a computing system. "Augmented reality" or "AR" refers to systems where a user views images of the real world after they have passed through a computing system. For example, a tablet with a camera on the back can capture images of the real world and then display the images on the screen on the opposite side of the tablet from the camera. The tablet can process and adjust or "augment" the images as they pass through the system, such as by adding virtual objects. "Mixed reality" or "MR" refers to systems where light entering a user's eye is partially generated by a computing system and partially composes light reflected off objects in the real world. For example, a MR headset could be shaped as a pair of glasses with a pass-through display, which allows light from the real world to pass through a waveguide that simultaneously emits light from a projector in the MR headset, allowing the MR headset to present virtual objects intermixed with the real objects the user can see. "Artificial reality," "extra reality," or "XR," as used herein, refers to any of VR, AR, MR, or any combination or hybrid thereof.

Implementations described herein provide specific technological improvements in the field of artificial reality. According to some implementations, an XR system can scan a real-world space to automatically determine a floor plane and height map of objects in the space. The XR system can use such a height map to automatically determine a consecutive floor area, which can include objects having heights below a threshold height difference relative to the floor plane (e.g., rugs) or that do not touch the floor (e.g., a low hanging ceiling lamp). The XR system can further automatically exclude areas not meeting certain criteria (e.g., small areas that would continually trigger display of the boundary if traversed, areas with a negative height relative to the floor plane, etc.), and/or scale down the determined consecutive floor area such that display of the boundary is triggered before physical contact can be made by a user. The implementations described herein can thereby generate an improved boundary for XR experiences relative to conventional techniques that requires no or less user input. Thus, implementations can reduce delay in rendering XR experiences, thereby improving latency and the overall user experience by minimizing or eliminating manual scene capture and setup for artificial reality. Further, implementations described herein reduce the possibility, risk, and/or occurrence of collisions between the user of the XR system and physical objects in the real-world space and/or other accidents (e.g., falling down the stairs).

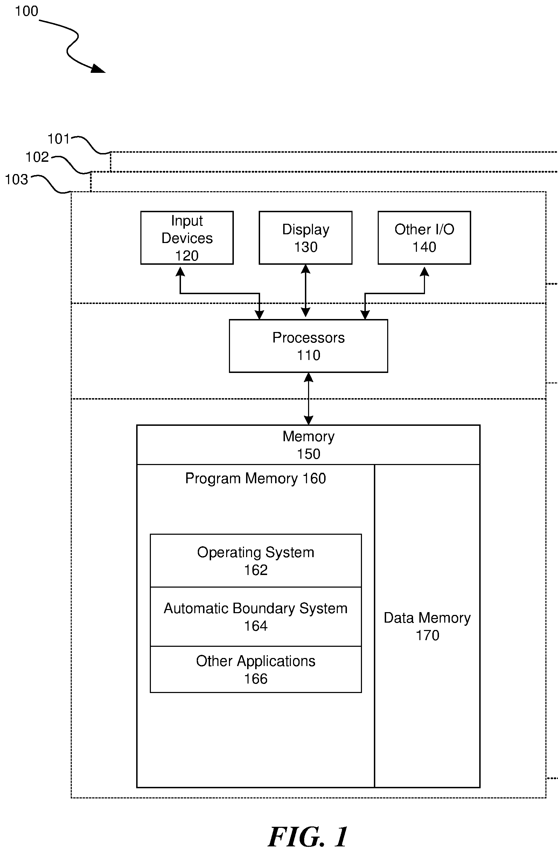

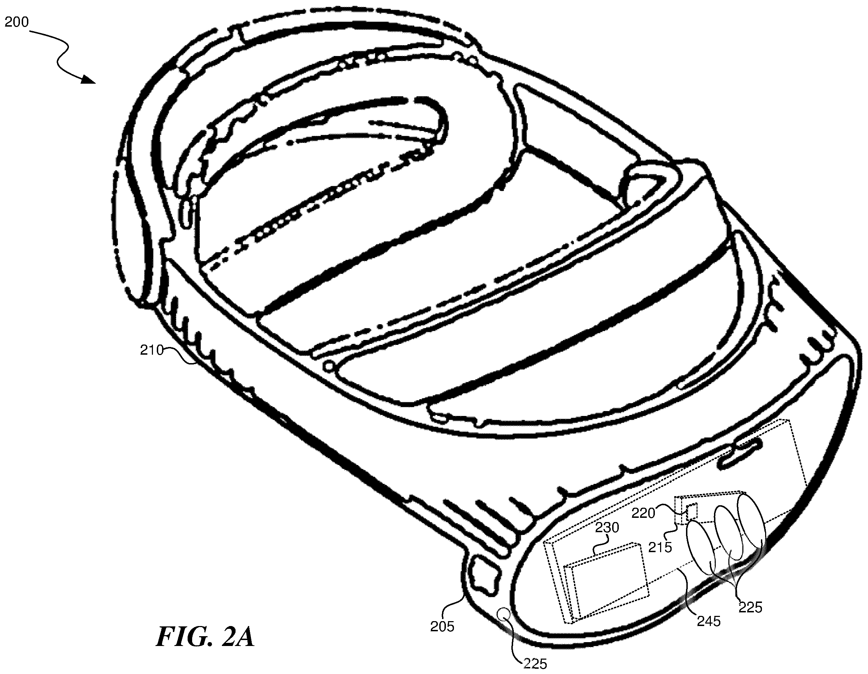

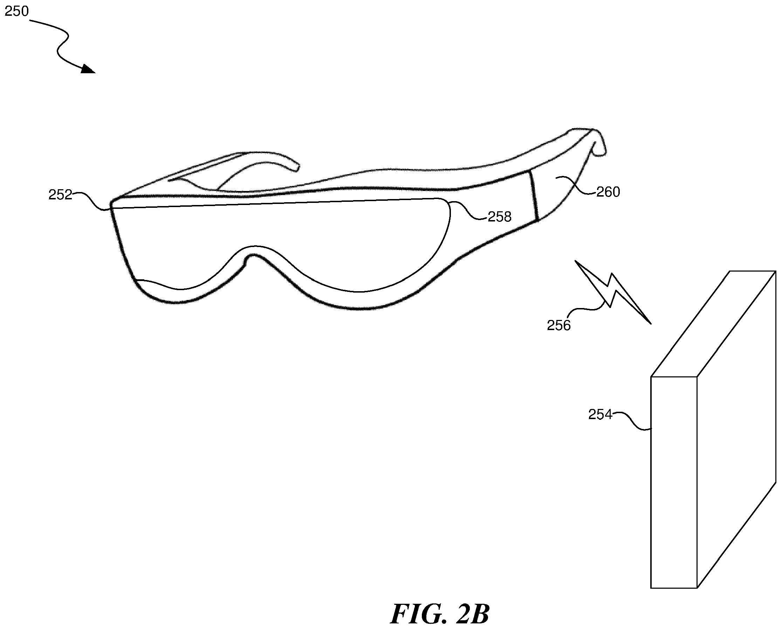

Several implementations are discussed below in more detail in reference to the figures. Figure 1 is a block diagram illustrating an overview of devices on which some implementations of the disclosed technology can operate. The devices can comprise hardware components of a computing system 100 that can provide an automatic boundary for an artificial reality (XR) environment by an XR device. In various implementations, computing system 100 can include a single computing device 103 or multiple computing devices (e.g., computing device 101, computing device 102, and computing device 103) that communicate over wired or wireless channels to distribute processing and share input data. In some implementations, computing system 100 can include a stand-alone headset capable of providing a computer created or augmented experience for a user without the need for external processing or sensors. In other implementations, computing system 100 can include multiple computing devices such as a headset and a core processing component (such as a console, mobile device, or server system) where some processing operations are performed on the headset and others are offloaded to the core processing component. Example headsets are described below in relation to Figures 2A and 2B. In some implementations, position and environment data can be gathered only by sensors incorporated in the headset device, while in other implementations one or more of the non-headset computing devices can include sensor components that can track environment or position data.

Computing system 100 can include one or more processor(s) 110 (e.g., central processing units (CPUs), graphical processing units (GPUs), holographic processing units (HPUs), etc.) Processors 110 can be a single processing unit or multiple processing units in a device or distributed across multiple devices (e.g., distributed across two or more of computing devices 101-103).

Computing system 100 can include one or more input devices 120 that provide input to the processors 110, notifying them of actions. The actions can be mediated by a hardware controller that interprets the signals received from the input device and communicates the information to the processors 110 using a communication protocol. Each input device 120 can include, for example, a mouse, a keyboard, a touchscreen, a touchpad, a wearable input device (e.g., a haptics glove, a bracelet, a ring, an earring, a necklace, a watch, etc.), a camera (or other light-based input device, e.g., an infrared sensor), a microphone, or other user input devices.

Processors 110 can be coupled to other hardware devices, for example, with the use of an internal or external bus, such as a PCI bus, SCSI bus, or wireless connection. The processors 110 can communicate with a hardware controller for devices, such as for a display 130. Display 130 can be used to display text and graphics. In some implementations, display 130 includes the input device as part of the display, such as when the input device is a touchscreen or is equipped with an eye direction monitoring system. In some implementations, the display is separate from the input device. Examples of display devices are: an LCD display screen, an LED display screen, a projected, holographic, or augmented reality display (such as a heads-up display device or a head-mounted device), and so on. Other I/O devices 140 can also be coupled to the processor, such as a network chip or card, video chip or card, audio chip or card, USB, firewire or other external device, camera, printer, speakers, CD-ROM drive, DVD drive, disk drive, etc.

In some implementations, input from the I/O devices 140, such as cameras, depth sensors, IMU sensor, GPS units, LiDAR or other time-of-flights sensors, etc. can be used by the computing system 100 to identify and map the physical environment of the user while tracking the user's location within that environment. This simultaneous localization and mapping (SLAM) system can generate maps (e.g., topologies, girds, etc.) for an area (which may be a room, building, outdoor space, etc.) and/or obtain maps previously generated by computing system 100 or another computing system that had mapped the area. The SLAM system can track the user within the area based on factors such as GPS data, matching identified objects and structures to mapped objects and structures, monitoring acceleration and other position changes, etc.

Computing system 100 can include a communication device capable of communicating wirelessly or wire-based with other local computing devices or a network node. The communication device can communicate with another device or a server through a network using, for example, TCP/IP protocols. Computing system 100 can utilize the communication device to distribute operations across multiple network devices.

The processors 110 can have access to a memory 150, which can be contained on one of the computing devices of computing system 100 or can be distributed across of the multiple computing devices of computing system 100 or other external devices. A memory includes one or more hardware devices for volatile or non-volatile storage, and can include both read-only and writable memory. For example, a memory can include one or more of random access memory (RAM), various caches, CPU registers, read-only memory (ROM), and writable non-volatile memory, such as flash memory, hard drives, floppy disks, CDs, DVDs, magnetic storage devices, tape drives, and so forth. A memory is not a propagating signal divorced from underlying hardware; a memory is thus non-transitory. Memory 150 can include program memory 160 that stores programs and software, such as an operating system 162, automatic boundary system 164, and other application programs 166. Memory 150 can also include data memory 170 that can include, e.g., floor plane data, height map data, boundary data, consecutive floor area data, enclosed area data, threshold data, scaling data, carving data, rendering data, configuration data, settings, user options or preferences, etc., which can be provided to the program memory 160 or any element of the computing system 100.

In various implementations, the technology described herein can include a non-transitory computer-readable storage medium storing instructions, the instructions, when executed by a computing system, cause the computing system to perform steps as shown and described herein. In various implementations, the technology described herein can include a computing system comprising one or more processors and one or more memories storing instructions that, when executed by the one or more processors, cause the computing system to steps as shown and described herein.

Some implementations can be operational with numerous other computing system environments or configurations. Examples of computing systems, environments, and/or configurations that may be suitable for use with the technology include, but are not limited to, XR headsets, personal computers, server computers, handheld or laptop devices, cellular telephones, wearable electronics, gaming consoles, tablet devices, multiprocessor systems, microprocessor-based systems, set-top boxes, programmable consumer electronics, network PCs, minicomputers, mainframe computers, distributed computing environments that include any of the above systems or devices, or the like.

Figure 2A is a wire diagram of a virtual reality head-mounted display (HMD) 200, in accordance with some embodiments. In this example, HMD 200 also includes augmented reality features, using passthrough cameras 225 to render portions of the real world, which can have computer generated overlays. The HMD 200 includes a front rigid body 205 and a band 210. The front rigid body 205 includes one or more electronic display elements of one or more electronic displays 245, an inertial motion unit (IMU) 215, one or more position sensors 220, cameras and locators 225, and one or more compute units 230. The position sensors 220, the IMU 215, and compute units 230 may be internal to the HMD 200 and may not be visible to the user. In various implementations, the IMU 215, position sensors 220, and cameras and locators 225 can track movement and location of the HMD 200 in the real world and in an artificial reality environment in three degrees of freedom (3DoF) or six degrees of freedom (6DoF). For example, locators 225 can emit infrared light beams which create light points on real objects around the HMD 200 and/or cameras 225 capture images of the real world and localize the HMD 200 within that real world environment. As another example, the IMU 215 can include e.g., one or more accelerometers, gyroscopes, magnetometers, other non-camera-based position, force, or orientation sensors, or combinations thereof, which can be used in the localization process. One or more cameras 225 integrated with the HMD 200 can detect the light points. Compute units 230 in the HMD 200 can use the detected light points and/or location points to extrapolate position and movement of the HMD 200 as well as to identify the shape and position of the real objects surrounding the HMD 200.

The electronic display(s) 245 can be integrated with the front rigid body 205 and can provide image light to a user as dictated by the compute units 230. In various embodiments, the electronic display 245 can be a single electronic display or multiple electronic displays (e.g., a display for each user eye). Examples of the electronic display 245 include: a liquid crystal display (LCD), an organic light-emitting diode (OLED) display, an active-matrix organic light-emitting diode display (AMOLED), a display including one or more quantum dot light-emitting diode (QOLED) sub-pixels, a projector unit (e.g., microLED, LASER, etc.), some other display, or some combination thereof.

In some implementations, the HMD 200 can be coupled to a core processing component such as a personal computer (PC) (not shown) and/or one or more external sensors (not shown). The external sensors can monitor the HMD 200 (e.g., via light emitted from the HMD 200) which the PC can use, in combination with output from the IMU 215 and position sensors 220, to determine the location and movement of the HMD 200.

Figure 2B is a wire diagram of a mixed reality HMD system 250 which includes a mixed reality HMD 252 and a core processing component 254. The mixed reality HMD 252 and the core processing component 254 can communicate via a wireless connection (e.g., a 60 GHz link) as indicated by link 256. In other implementations, the mixed reality system 250 includes a headset only, without an external compute device or includes other wired or wireless connections between the mixed reality HMD 252 and the core processing component 254. The mixed reality HMD 252 includes a pass-through display 258 and a frame 260. The frame 260 can house various electronic components (not shown) such as light projectors (e.g., LASERs, LEDs, etc.), cameras, eye-tracking sensors, MEMS components, networking components, etc.

The projectors can be coupled to the pass-through display 258, e.g., via optical elements, to display media to a user. The optical elements can include one or more waveguide assemblies, reflectors, lenses, mirrors, collimators, gratings, etc., for directing light from the projectors to a user's eye. Image data can be transmitted from the core processing component 254 via link 256 to HMD 252. Controllers in the HMD 252 can convert the image data into light pulses from the projectors, which can be transmitted via the optical elements as output light to the user's eye. The output light can mix with light that passes through the display 258, allowing the output light to present virtual objects that appear as if they exist in the real world.

Similarly to the HMD 200, the HMD system 250 can also include motion and position tracking units, cameras, light sources, etc., which allow the HMD system 250 to, e.g., track itself in 3DoF or 6DoF, track portions of the user (e.g., hands, feet, head, or other body parts), map virtual objects to appear as stationary as the HMD 252 moves, and have virtual objects react to gestures and other real-world objects.

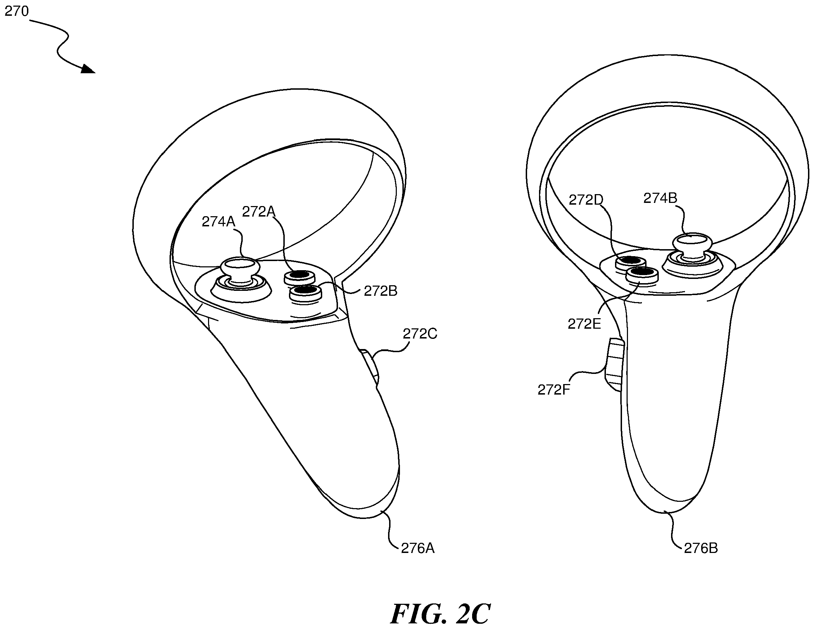

Figure 2C illustrates controllers 270 (including controller 276A and 276B), which, in some implementations, a user can hold in one or both hands to interact with an artificial reality environment presented by the HMD 200 and/or HMD 250. The controllers 270 can be in communication with the HMDs, either directly or via an external device (e.g., core processing component 254). The controllers can have their own IMU units, position sensors, and/or can emit further light points. The HMD 200 or 250, external sensors, or sensors in the controllers can track these controller light points to determine the controller positions and/or orientations (e.g., to track the controllers in 3DoF or 6DoF). The compute units 230 in the HMD 200 or the core processing component 254 can use this tracking, in combination with IMU and position output, to monitor hand positions and motions of the user. The controllers can also include various buttons (e.g., buttons 272A-F) and/or joysticks (e.g., joysticks 274A-B), which a user can actuate to provide input and interact with objects.

In various implementations, the HMD 200 or 250 can also include additional subsystems, such as an eye tracking unit, an audio system, various network components, etc., to monitor indications of user interactions and intentions. For example, in some implementations, instead of or in addition to controllers, one or more cameras included in the HMD 200 or 250, or from external cameras, can monitor the positions and poses of the user's hands to determine gestures and other hand and body motions. As another example, one or more light sources can illuminate either or both of the user's eyes and the HMD 200 or 250 can use eye-facing cameras to capture a reflection of this light to determine eye position (e.g., based on set of reflections around the user's cornea), modeling the user's eye and determining a gaze direction.

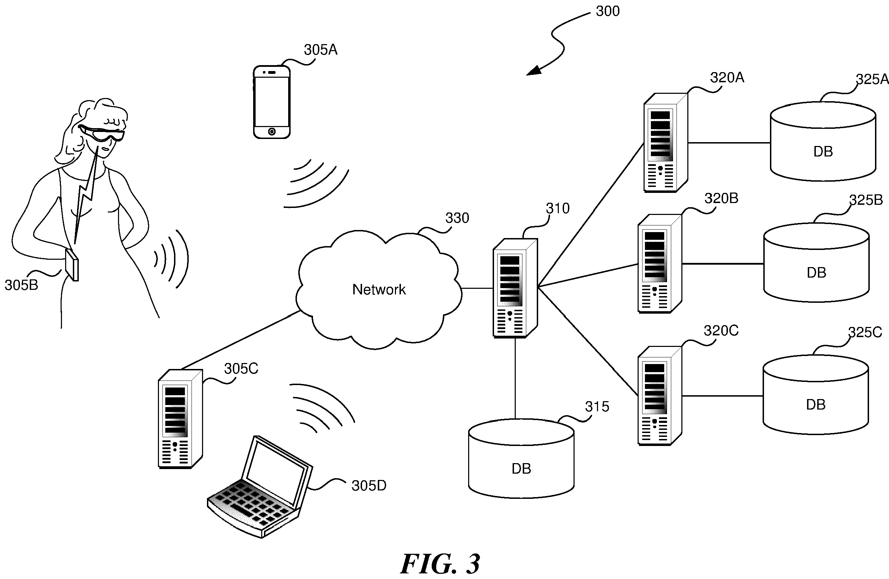

Figure 3 is a block diagram illustrating an overview of an environment 300 in which some implementations of the disclosed technology can operate. Environment 300 can include one or more client computing devices 305A-D, examples of which can include computing system 100. In some implementations, some of the client computing devices (e.g., client computing device 305B) can be the HMD 200 or the HMD system 250. Client computing devices 305 can operate in a networked environment using logical connections through network 330 to one or more remote computers, such as a server computing device.

In some implementations, server 310 can be an edge server which receives client requests and coordinates fulfillment of those requests through other servers, such as servers 320A-C. Server computing devices 310 and 320 can comprise computing systems, such as computing system 100. Though each server computing device 310 and 320 is displayed logically as a single server, server computing devices can each be a distributed computing environment encompassing multiple computing devices located at the same or at geographically disparate physical locations.

Client computing devices 305 and server computing devices 310 and 320 can each act as a server or client to other server/client device(s). Server 310 can connect to a database 315. Servers 320A-C can each connect to a corresponding database 325A-C. As discussed above, each server 310 or 320 can correspond to a group of servers, and each of these servers can share a database or can have their own database. Though databases 315 and 325 are displayed logically as single units, databases 315 and 325 can each be a distributed computing environment encompassing multiple computing devices, can be located within their corresponding server, or can be located at the same or at geographically disparate physical locations.

Network 330 can be a local area network (LAN), a wide area network (WAN), a mesh network, a hybrid network, or other wired or wireless networks. Network 330 may be the Internet or some other public or private network. Client computing devices 305 can be connected to network 330 through a network interface, such as by wired or wireless communication. While the connections between server 310 and servers 320 are shown as separate connections, these connections can be any kind of local, wide area, wired, or wireless network, including network 330 or a separate public or private network.

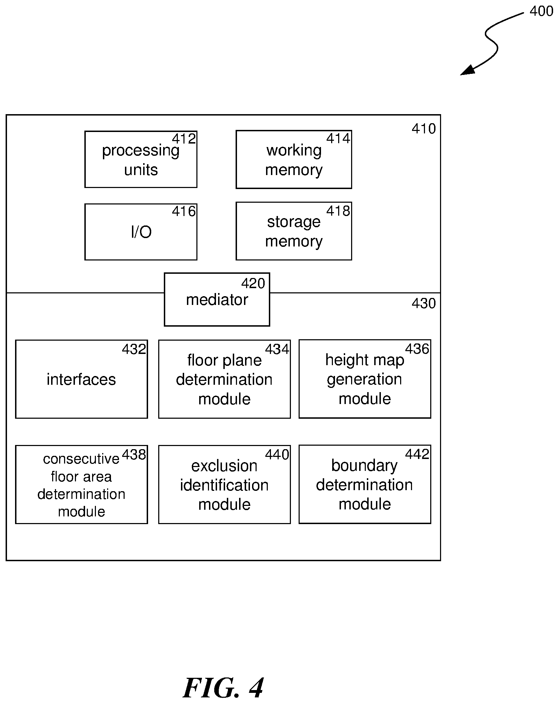

Figure 4 is a block diagram illustrating components 400 which, in some implementations, can be used in a system employing the disclosed technology. Components 400 can be included in one device of computing system 100 or can be distributed across multiple of the devices of computing system 100. The components 400 include hardware 410, mediator 420, and specialized components 430. As discussed above, a system implementing the disclosed technology can use various hardware including processing units 412, working memory 414, input and output devices 416 (e.g., cameras, displays, IMU units, network connections, etc.), and storage memory 418. In various implementations, storage memory 418 can be one or more of: local devices, interfaces to remote storage devices, or combinations thereof. For example, storage memory 418 can be one or more hard drives or flash drives accessible through a system bus or can be a cloud storage provider (such as in storage 315 or 325) or other network storage accessible via one or more communications networks. In various implementations, components 400 can be implemented in a client computing device such as client computing devices 305 or on a server computing device, such as server computing device 310 or 320.

Mediator 420 can include components which mediate resources between hardware 410 and specialized components 430. For example, mediator 420 can include an operating system, services, drivers, a basic input output system (BIOS), controller circuits, or other hardware or software systems.

Specialized components 430 can include software or hardware configured to perform operations for providing an automatic boundary for an artificial reality (XR) environment provided by an artificial reality (XR) system. Specialized components 430 can include floor plane determination module 434, height map generation module 436, consecutive floor area determination module 438, exclusion identification module 440, boundary determination module 442, and components and APIs which can be used for providing user interfaces, transferring data, and controlling the specialized components, such as interfaces 432. In some implementations, components 400 can be in a computing system that is distributed across multiple computing devices or can be an interface to a server-based application executing one or more of specialized components 430. Although depicted as separate components, specialized components 430 may be logical or other nonphysical differentiations of functions and/or may be submodules or code-blocks of one or more applications.

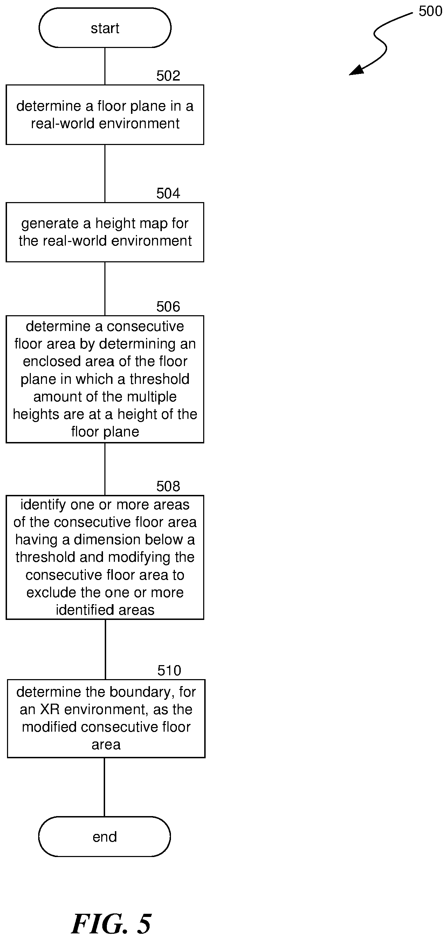

Floor plane determination module 434 can determine a floor plane in a real-world environment. In some implementations, floor plane determination module 434 can determine a floor plane via one or more images captured by one or more cameras, separate or in conjunction with input from one or more depth sensors, which can indicate a continuous area below the XR system (e.g., an area of continuous color, an area of increasing continuous depth from the XR system, etc.). In some implementations, floor plane determination module 434 can determine the floor plane by tracking input from one or more controllers (e.g., controllers 276A and/or 276B of Figure 2C), e.g., based on the user placing a controller on the floor plane (thereby indicating its location), based on the user outlining the floor plane with a ray cast from a controller, based on the user touching the floor with a finger or hand (e.g., via hand tracking), etc. In some implementations, floor plane determination module 434 can determine the floor plane based on a generated XR space model or mesh corresponding to the real-world environment, as defined further herein. Further details regarding determining a floor plane in a real-world environment are described herein with respect to block 502 of Figure 5.

Height map generation module 436 can generate a height map for the real-world environment by detecting multiple heights corresponding to multiple physical objects in the real-world environment. The physical objects can include fixed and/or moveable physical objects in the real-world space (including the walls, ceiling, floor, and other objects, such as furniture). The multiple heights can be detected relative to the floor plane, which can be set to a height of zero in the height map. For example, height map generation module 436 can detect heights relative to the floor plane by capturing image data and/or depth data indicative of physical objects within the space, and/or their heights relative to the XR system (which can be compared to the height of the floor plane relative to the XR system to ascertain their heights, as well as their dimensions, to generate the height map). In some implementations, height map generation module 436 can detect heights based on a generated mesh, as noted above and described further herein, which can include features indicative of physical objects in the real-world environment.

In some implementations, height map generation module 436 can identify the physical objects from which to detect heights based on scene data gathered or established for the real-world environment. The scene data can be generated by storing object data, associated with one or more physical objects in the real-world environment. The scene data can provide an identified object type from a set of object types defined as scene components in the real-world environment, with reference to the one or more locations in the real-world environment. For example, the object type can include a semantic label, such as a wall, ceiling, door, table, window, counter, etc. In some implementations, the identified object type and/or semantic label can be identified automatically by applying object detection and/or recognition techniques. In some implementations, the scene data can be gathered by the XR system performing process 500 previously or in real-time, while in other implementations, the scene data could have been previously gathered by another XR system and shared with the XR system performing process 500. Further details regarding generating a height map for a real-world environment by detecting multiple heights corresponding to multiple physical objects in a real-world environment are described herein with respect to block 504 of Figure 5.

In some implementations, consecutive floor area determination module 438, exclusion identification module 440, and boundary determination module 442 can perform functions in tandem to automatically generate a boundary for an XR environment. Consecutive floor area determination module 438 can determine a consecutive floor area by determining an enclosed area of the floor plane, determined by floor plane determination module 434, in which a threshold amount of the multiple heights, detected by height map generation module 436, in the enclosed area, are at a height of the floor plane. The area can be enclosed by surrounding physical objects, e.g., the detected walls of the real-world environment or other objects within a threshold depth of the walls, such as windows, doors, etc. For example, consecutive floor area determination module 438 can determine the consecutive floor area including all of detected heights at the floor plane (i.e., all areas at a zero height). Thus, in some implementations, consecutive floor area determination module 438 can exclude, from the consecutive floor area, negative heights of the height map (e.g., corresponding to downward leading stairs) and positive heights of the height map (e.g., physical objects on the floor), beyond particular threshold heights. Further details regarding determining a consecutive floor area by determining an enclosed area of a floor plane are described herein with respect to block 506 of Figure 5.

Exclusion identification module 440 can identify one or more areas of the consecutive floor area, determined by consecutive floor area determination module 438, having a dimension below a threshold. In some implementations, the dimension can be a width dimension (e.g., an "x-direction") of an area of the floor plane, enclosed on at least two sides with one or more heights indicated by the height map, the width dimension extending parallel to the floor plane. For example, when the XR system is facing the area of the floor plane to be identified, a height dimension (e.g., a "y-direction") can be defined extending from the XR system transverse to and intersecting the floor plane, a depth dimension (e.g., a "z-direction") can be defined from the XR system along the floor plane and extending away from the XR system, and the width direction (e.g., the "x-direction") can be defined perpendicular to both the y- and z-directions. Thus, exclusion identification module 400 can identify areas having widths below a threshold, e.g., a narrow hallway (e.g., having a width less than 1 meter). Exclusion identification module 440 can further modify the consecutive floor area to exclude the one or more identified areas. Further details regarding identifying one or more areas of a consecutive floor area having a dimension below a threshold, and modifying the consecutive floor area to exclude the one or more identified areas, are described herein with respect to block 508 of Figure 5.

Boundary determination module 442 can determine a boundary, for an XR environment, as the consecutive floor area determined by consecutive floor area determination module 438 and modified by exclusion identification module 440. In some implementations, boundary determination module 442 can store the determined boundary for later rendering of the XR environment, and/or for sharing with another XR system accessing the real-world environment. In some implementations, boundary determination module can further render the XR environment relative to the determined boundary. As described further herein, the boundary can define where the user of the XR system can access the XR environment without restrictions. If the XR system approaches the boundary within a threshold distance, with higher than a threshold velocity, and/or crosses the boundary, the XR system can take one or more preventative actions and/or proactive measures, such as displaying a warning, displaying the boundary, activating pass-through, etc. Further details regarding determining a boundary for an XR environment are described herein with respect to block 510 of Figure 5.

Those skilled in the art will appreciate that the components illustrated in Figures 1-4 described above, and in each of the flow diagrams discussed below, may be altered in a variety of ways. For example, the order of the logic may be rearranged, substeps may be performed in parallel, illustrated logic may be omitted, other logic may be included, etc. In some implementations, one or more of the components described above can execute one or more of the processes described below.

Figure 5 is a flow diagram illustrating a process 500 used in some implementations of the present technology for generating an automatic boundary for an artificial reality (XR) environment provided by an XR system. As noted above, the term "boundary" is used interchangeably herein with "guardian," as further defined herein. In some implementations, process 500 can be performed upon activation or donning of the XR system. In some implementations, process 500 can be performed upon launch of an XR application on the XR system. In some implementations, process 500 can be performed based on a user-, application-, or system-level request. In some implementations, process 500 can be performed upon a determination that a boundary has not been previous established and/or stored for a real-world environment surrounding the XR system.

In some implementations, process 500 can be performed upon failure to recognize and/or failure of re-localization of the XR system in the real-world environment. Process 500 can attempt to match the real-world space to a previously mapped real-world space (having previously established boundary data) by any suitable method. For example, process 500 can prompt the user to look around the room, thereby generating a mesh that can be compared with existing room meshes and/or an XR space model that can be compared to existing meshes and/or XR space models. In another example, process 500 can use one or more cameras to capture one or more images of the real-world space, identify visual features of the real-world space (e.g., corners, edges, physical objects, etc.), and compare those visual features to previously captured visual features of known real-world spaces. In still another example, process 500 can capture a localization map including one or more spatial anchors for the real-world space, and determine whether the localization map can be merged or matched to a preexisting localization map including one or more boundaries and/or other spatial data for the real-world space (e.g., spatial anchor data providing frames of reference for the XR environment). However, it is contemplated that, in some implementations, process 500 need not attempt to re-localize in the space.

In some implementations, some or all of process 500 can be performed by the XR system, which can include one or more XR devices, such as an XR head-mounted display (HMD) (e.g., XR HMD 200 of Figure 2A and/or XR HMD 252 of Figure 2B). In some implementations, some or all of process 500 can be performed by another XR device of an XR system including an XR HMD, such as external processing components, one or more controllers (e.g., controllers 276A and/or 276B of Figure 2C), other peripheral devices, and/or the like. In some implementations, process 500 can be performed by automatic boundary system 164 of Figure 1. In some implementations, process 500 can be performed by components 400 of Figure 4.

At block 502, process 500 can determine a floor plane in a real-world environment. In some implementations, process 500 can determine the floor plane automatically, such as by applying a machine learning model to data collected by the XR system. For example, process 500 can identify the floor plane based on an XR space model generated for the real-world environment. An XR space model (referred to interchangeably herein as a "room box") can indicate where the walls, floor, and/or ceiling exist the real-world space. In some implementations, process 500 can obtain the XR space model automatically. For example, as described above, a user of an XR system can scan the real-world space using one or more cameras and/or one or more depth sensors by moving and/or looking around the real-world space with the XR system, and automatically identify one or more flat surfaces (e.g., walls, floor ceiling) in the real-world space using such image and/or depth data. For example, process 500 can identify the flat surfaces by analyzing the image and/or depth data for large areas of the same color, of consistently increasing and/or decreasing depth relative to the XR system, and/or of particular orientations (e.g., above, below, or around the XR system), etc.

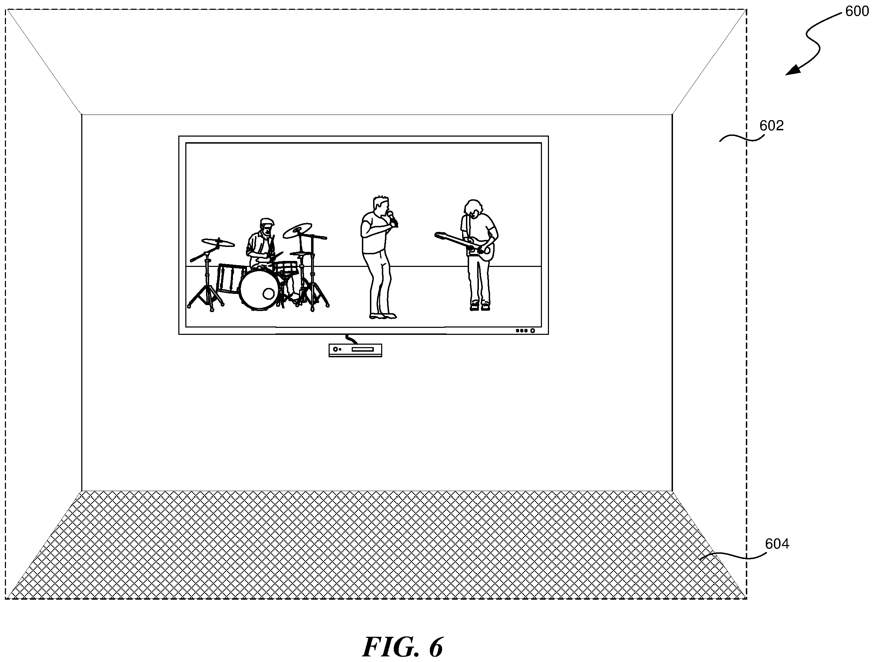

In some implementations, process 500 can identify the floor plane (e.g., via an XR space model), at least in part, via detected positions of one or more controllers (e.g., controller 276A and/or controller 276B of Figure 2C) and/or tracked hand or other body part positions (e.g., via one or more cameras of the XR system and/or an external device). For example, the user of the XR system can move the controllers or body parts around the real-world environment to, for example, outline the floor with a ray projected from a controller or finger. In another example, the user of the XR system can set the controller or a body part on the floor to identify them based on the position of the controller or body part (e.g., as detected by one or more cameras on the XR system, as detected via one or more sensors of an IMU, etc.). In some implementations, process 500 can automatically identify the floor, which can then be refined (if necessary) via one or more controllers or body parts, such as by clicking or pinching and dragging the floor plane toward or away from the user, or by placing the controller or hand on the floor. Further details regarding identifying and realigning an XR room, including a floor plane, are described in U.S. Pat. App. No. 18/346,379, filed July 3, 2023, entitled "Artificial Reality Room Capture Realignment," which is herein incorporated by reference in its entirety. An exemplary determined floor plane is shown and described herein with respect to Figure 6. In some implementations, process 500 can similarly identify one or more walls and/or the ceiling of the real-world environment.

In some implementations, process 500 can identify the floor plane automatically based on a three-dimensional (3D) mesh generated by scanning the real-world environment. The mesh can be, for example, a three-dimensional (3D) model of the boundaries of the real-world space, including one or more walls, the ceiling, the floor, one or more physical objects, and/or the like. In some implementations, process 500 can generate the mesh using one or more cameras, one or more depth sensors, or any combination thereof. In some implementations, however, it is contemplated that depth data need not be captured, and can instead be predicted from the one or more images, such as by a machine learning model. In some implementations, process 500 can further perform post-processing on the mesh to refine and/or simplify the mesh. Further details regarding generating and using XR space models and meshes are described in U.S. Pat. App. No. 18/454,349, filed August 23, 2023, entitled "Assisted Scene Capture for an Artificial Reality Environment" (Attorney Docket No. 3589-0286US01), which is herein incorporated by reference in its entirety.

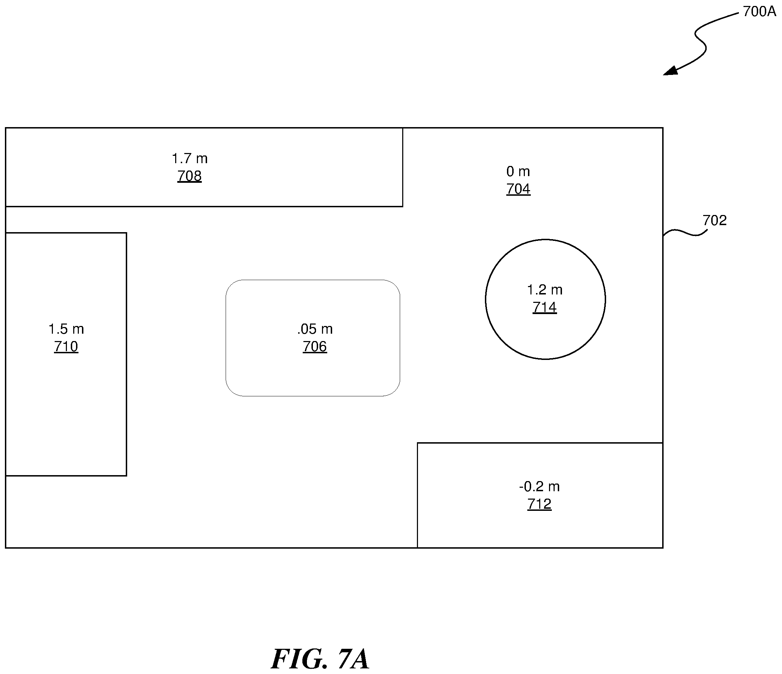

At block 504, process 500 can generate a height map for the real-world environment by detecting multiple heights corresponding to multiple physical objects in the real-world environment, the multiple heights being detected relative to the floor plane. In some implementations, process 500 can detect the multiple heights relative to the floor plane by using depth sensor measurements between the XR system and one or more identified walls. For example, process 500 can determine that a physical object is present 2 meters from the XR system (whereas the wall is 5 meters away), and that the physical object extends above the floor plane by a particular distance (e.g., 1 meter) before the depth sensor no longer detects the physical object (and instead detects the wall at a 5-meter distance). In some implementations, process 500 can detect the multiple heights relative to the floor plane by applying computer vision techniques to one or more images captured by the XR system. For example, for a set area captured by XR system (e.g., 1 square centimeter), process 500 can identify a physical object and determine its highest point below the identified ceiling. In some implementations, process 500 can ascertain the height of the physical object based on the known heights of the floor plane (e.g., set to zero) and the ceiling, and/or based on the known height of the XR system and distance of the XR system from the physical object. In some implementations, process 500 can identify the physical object and/or determine the height of the physical object by applying machine learning techniques. An exemplary generated height map is shown and described herein with respect to Figure 7A.

In some implementations, in generating the height map, process 500 can perform one or more pre-processing steps prior to generation of a boundary based on the height map. In some implementations, process 500 can collapse, in the height map, one or more heights, that are below a threshold distance of the floor plane, to the floor plane. For example, process 500 can collapse detected heights below 3 centimeters to the floor plane in the height map, e.g., to disregard minor variations on the floor caused by carpeting, rugs, and other low objects that would not occlude movement of the user. In some implementations, process 500 can exclude one or more heights, that are a threshold distance above the floor plane, from the height map. For example, process 500 can exclude physical objects that are detected above 2.5 meters, e.g., to disregard low hanging lamps and other ceiling-fixed objects that would not occlude movement of the user.

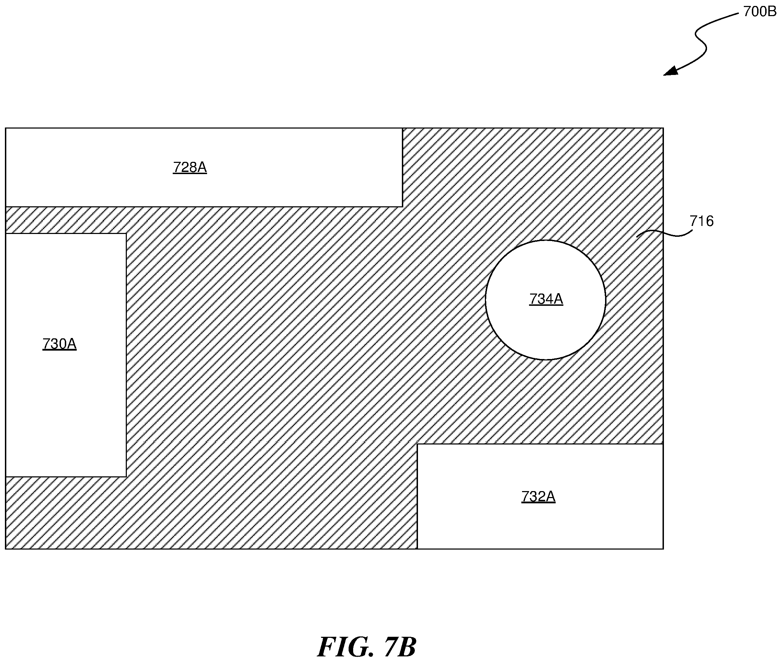

In some implementations, process 500 can automatically generate the boundary for the XR environment by performing at least blocks 506-510. At block 506, process 500 can determine a consecutive floor area by determining an enclosed area of the floor plane in which a threshold amount of the multiple heights, in the enclosed area, are at a height of the floor plane. For example, process 500 can determine the consecutive floor area by locating a continuous enclosed area of the floor plane (e.g., at a zero height or at a height collapsed to the floor plane as described above) within the identified walls of the real-world environment. In other words, in some implementations, the threshold amount of the multiple heights that are at a height of the floor plane within the enclosed area can be all of the heights within the enclosed area. Thus, in some implementations, in determining the consecutive floor area, process 500 can exclude areas that have one or more positive heights relative to the floor plane (e.g., physical objects at 0.5 meters, such as coffee tables), and/or areas that have one or more negative heights relative to the floor plane (e.g., physical objects at -0.4 meters and below, such as downward leading stairs). An exemplary determined consecutive floor area is shown and described herein with respect to Figure 7B.

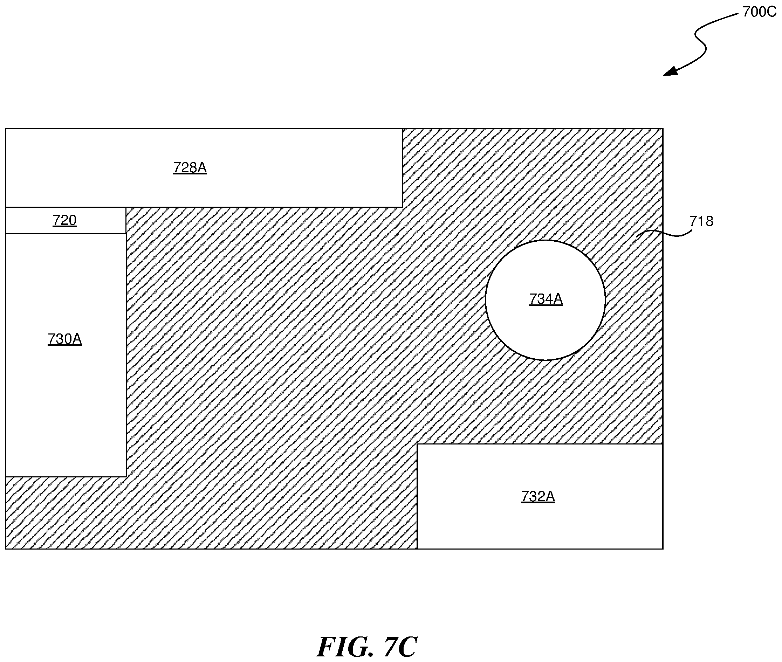

At block 508, process 500 can identify one or more areas of the consecutive floor area having a dimension below a threshold and modify the consecutive floor area to exclude the one or more identified areas. For example, process 500 can determine areas of the consecutive floor area with narrow widths relative to the XR system. Process 500 can remove such areas in generating the boundary so that the boundary is not continuously triggered if the user approached or entered the narrow areas, which would otherwise affect user experience. An exemplary modified consecutive floor area is shown and described herein with respect to Figure 7C.

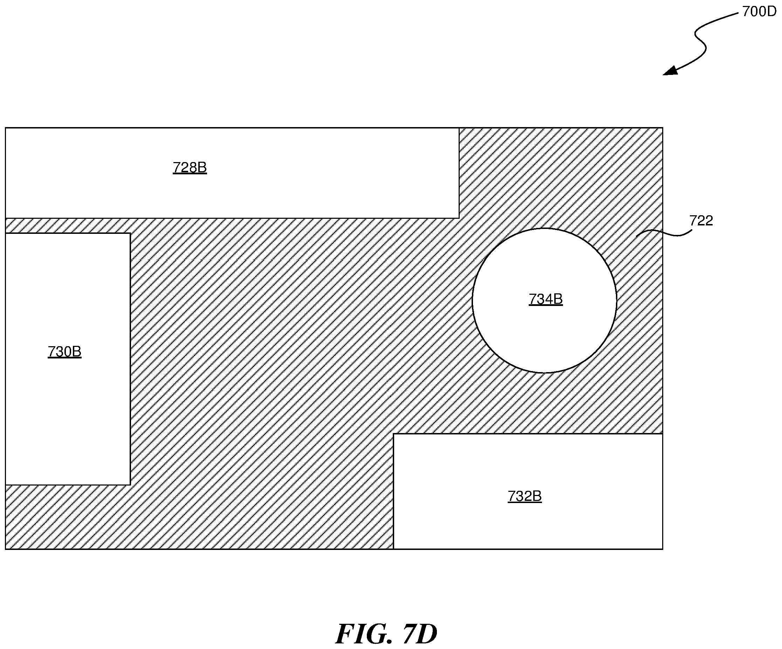

In some implementations, process 500 can scale the consecutive floor area down by a predetermined amount (not shown in Figure 5). For example, to add an additional level of safety for the user, process 500 can reduce one or more portions of, or the entire, consecutive floor area for the boundary by a set amount (e.g., 0.1 meters) and/or by a set percentage (e.g., 5%). An exemplary scaled floor area is shown and described herein with respect to Figure 7D.

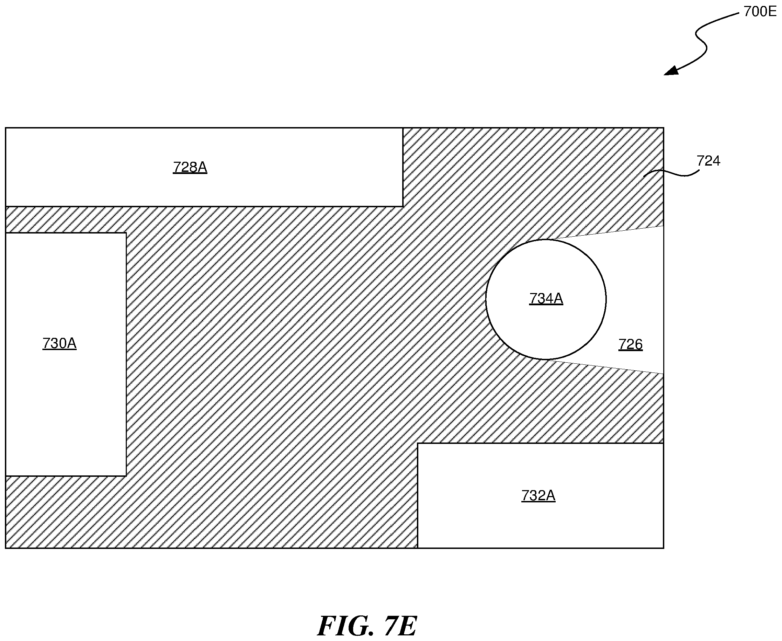

In some implementations, process 500 can carve one or more portions out of the consecutive floor area where the consecutive floor area encloses one or more detected heights, of the multiple detected heights, that are above a threshold, such that the carved consecutive floor area does not enclose any heights above the threshold (not shown in Figure 5). For example, for a physical object having a threshold height (e.g., at least 15 centimeters, or just above the floor plane) and surrounded by the floor plane, process 500 can remove an area from the consecutive floor area such that the physical object is no longer surrounded by the floor plane. An exemplary carved consecutive floor area is shown and described herein with respect to Figure 7E.

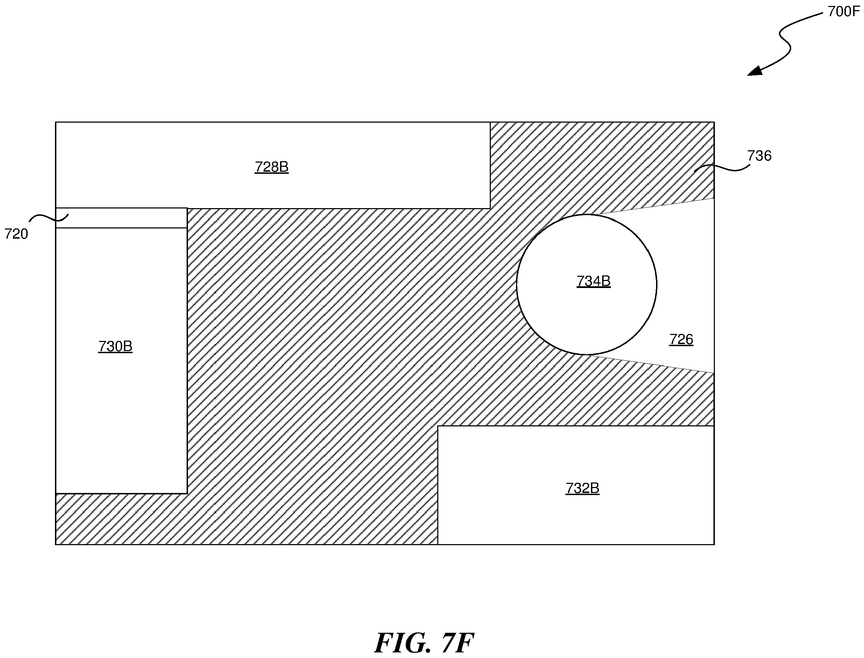

At block 510, process 500 can determine the boundary, for the XR environment, as the determined consecutive floor area further modified by any combination of one or more of the above steps. In some implementations, process 500 can render the XR environment, on the XR system, relative to the boundary corresponding to the determined consecutive floor area. An exemplary generated boundary for an XR environment is shown and described herein with respect to Figure 7F. In some implementations, process 500 can store the boundary, corresponding to the determined consecutive floor area, for later rendering of an XR environment.

In some implementations, the determined consecutive floor area of the real-world environment, corresponding to the boundary for the XR environment, can define where the user can view, access, and/or interact with the XR environment without restriction. However, if the XR system and/or one or more body parts of the user (e.g., as detected by one or more cameras) comes within a threshold distance of the boundary and/or crosses the boundary, process 500 can enforce one or more restrictions and/or automatically perform actions on the XR system. For example, by the user of the XR system coming within a threshold distance of a boundary and/or crossing a boundary with the XR system and/or one or more detected body parts, process 500 can take one or more actions. In some implementations, the actions can include activating a warning overlaid on the XR environment (e.g., "You're too close to the wall!") or an instruction to move back into the guardian (e.g., "Back up!"). In some implementations, the actions can include pausing at least one of execution, updating, rendering, or any combination thereof, of the XR environment. For example, if a user leaves the guardian and enters a room that is unknown to the XR system and/or application, process 500 can stop executing and/or rendering the XR environment. In some implementations, the actions can include removing one or more virtual objects from the XR environment (e.g., ceasing rendering of virtual objects outside of the guardian, either associated with the same or a different application). In some implementations, the actions can include activating at least partial pass-through on the XR system, such as when a boundary is approached in VR mode. In some implementations, the actions can include displaying the guardian on the XR system, such that the user can visualize where the boundary is and move away from it.

Figure 6 is a conceptual diagram illustrating an example perspective view 600 from an artificial reality (XR) system of a determined floor plane 604 in a real-world environment 602. In some implementations, the XR system can automatically predict floor plane 604 and overlay a view of predicted floor plane 604 over the floor in real-world environment 602, such as by using one or more images and/or depth measurements (e.g., via one or more cameras and/or depth sensors) and applying computer vision and/or machine learning techniques. In some implementations, the user of the XR system can manually indicate the location of the floor to set floor plane 604, such as by placing a controller (not shown) onto the floor in real-world environment 602 and/or by placing a hand on the floor as detected via hand tracking systems. In some implementations, once floor plane 604 is determined and overlaid onto a view of real-world environment 602, the user can manually adjust floor plane 604 to correspond to the floor if the floor plane is incorrect, such as by clicking or grabbing displayed floor plane 604 and moving the hand or controller closer or further from the user. Although shown and described as having floor plane 604 displayed on the XR system, it is contemplated that, in some implementations, the XR system can determine floor plane 604 without displaying floor plane 604 on the XR system.

Figure 7A is a conceptual diagram illustrating an example overhead view 700A of a height map 702 corresponding to a real-world environment (e.g., a room). Height map 702 can be a mapping of the heights of physical objects 706-714, within the real-world environment, relative to floor plane 704, as detected by an XR system. Floor plane 704 can be set at a height of 0 meters. In this example, physical object 706 can be detected at a height of 0.5 meters relative to floor plane 704; physical object 708 can be detected at a height of 1.7 meters relative to floor plane 704; physical object 710 can be detected at a height of 1.5 meters relative to floor plane 704; physical object 712 can be detected at a height of -0.2 meters relative to floor plane 704; and physical object 714 can be detected at a height of 1.2 meters relative to floor plane 704.

In some implementations, prior to determining a consecutive floor area, the automatic boundary system described herein can collapse physical object 706 onto floor plane 704 in height map 702, as its height is below a threshold distance (e.g., below 0.1 meters). For example, physical object 706 can be a rug of negligible height difference relative to floor plane 704. Similarly, if a physical object is detected above a threshold distance off of floor plane 704 (e.g., 2 meters and higher), the automatic boundary system can remove the physical object (not shown) from height map 702 prior to determining a consecutive floor area. Such a physical object can be, for example, a low hanging lamp which would not occlude movement of the user in an XR environment.

Figure 7B is a conceptual diagram illustrating an example overhead view 700B of a determined consecutive floor area 716 corresponding to a real-world environment. The automatic boundary system described herein can determine consecutive floor area 716 by determining an enclosed area of floor plane 704 in which a threshold amount of the heights in the enclosed area are at a height of floor plane 704. In some implementations, all of the enclosed area of floor plane 704 has a height at floor plane 704. Thus, consecutive floor area 716 can exclude area 728A (corresponding to physical object 708 of Figure 7A), area 730A (corresponding to physical object 710 of Figure 7A), area 732A (corresponding to physical object 712 of Figure 7A), and area 734A (corresponding to physical object 714 of Figure 7A). In some implementations, physical object 706 can be collapsed onto height map 702 in pre-processing as described above, such that consecutive floor area 716 does not exclude an area corresponding to physical object 706. In some implementations in which physical object 706 is not collapsed onto height map 702 during pre-processing, however, the automatic boundary system can similarly determine consecutive floor area 716 as shown in Figure 7B, as a threshold amount of the enclosed heights (e.g., 95%) are at the height of floor plane 704.

Figure 7C is a conceptual diagram illustrating an example overhead view 700C of a modified consecutive floor area 718 corresponding to a real-world environment. In some implementations, the automatic boundary system described herein can identify an area 720, between areas 728A and 730A (e.g., corresponding to physical objects 708 and 710, respectively) that has a dimension (e.g., a width) below a threshold (e.g., 1 meter). Thus, in some implementations, the automatic boundary system described herein can generate modified consecutive floor area 718 (relative to determined consecutive floor area 716 of Figure 7B) to exclude area 720.

Figure 7D is a conceptual diagram illustrating an example overhead view 700D of a scaled consecutive floor area 722 corresponding to a real-world environment. In some implementations, the automatic boundary system described herein can build an additional safety buffer into consecutive floor area 722, relative to determined consecutive floor area 716 of Figure 7B, by removing an additional amount of floor space around areas 728A-734A (corresponding to physical objects 708-714, respectively). For example, the automatic boundary system can increase the size of excluded areas 728A-734A by 10%, thus resulting in scaled consecutive floor area 722 having excluded areas 728B-734B. In this example, excluded areas 728B-734B can thus have a size 10% larger than that of physical objects 708-714, providing an additional margin of safety.

Figure 7E is a conceptual diagram illustrating an example overhead view 700E of a carved consecutive floor area 724 corresponding to a real-world environment. In some implementations, the automatic boundary system described herein can carve portion 726 out of determined consecutive floor area 716 of Figure 7B where consecutive floor area 718 encloses excluded area 734A, based on a determination that physical object 714 (corresponding to excluded area 734A) has a height above a threshold (e.g., 0.15 meters). The automatic boundary system can thereby generate carved consecutive floor area 724, which does not enclose area 734A corresponding to physical object 714.

It is contemplated that any of techniques described herein with respect to Figures 7B-E can be applied singularly or in any combination to generate a consecutive floor area corresponding to a boundary for an artificial reality (XR) environment. For example, Figure 7F is a conceptual diagram illustrating an example overhead view 700F of a consecutive floor area 736, corresponding to a boundary for an XR environment, generated by applying all of the techniques described with respect to Figures 7A-E. For example, consecutive floor area 736 has excluded area 720 where consecutive floor area 736 would otherwise have a width below a threshold, such as is described further with respect to Figure 7C. In addition, consecutive floor area 736 has 10% larger excluded areas 728B-734B, thereby scaling consecutive floor area 736 down relative to consecutive floor area 716 of Figure 7B, such as is described further with respect to Figure 7D. Further, consecutive floor area 736 has carved portion 726, such that consecutive floor area 736 does not enclose excluded area 734B, such as is described further with respect to Figure 7E. In some implementations, consecutive floor area 736 can be established as a boundary that can be used in rendering an XR environment.

Reference in this specification to "implementations" (e.g., "some implementations," "various implementations," "one implementation," "an implementation," etc.) means that a particular feature, structure, or characteristic described in connection with the implementation is included in at least one implementation of the disclosure. The appearances of these phrases in various places in the specification are not necessarily all referring to the same implementation, nor are separate or alternative implementations mutually exclusive of other implementations. Moreover, various features are described which may be exhibited by some implementations and not by others. Similarly, various requirements are described which may be requirements for some implementations but not for other implementations.

As used herein, being above a threshold means that a value for an item under comparison is above a specified other value, that an item under comparison is among a certain specified number of items with the largest value, or that an item under comparison has a value within a specified top percentage value. As used herein, being below a threshold means that a value for an item under comparison is below a specified other value, that an item under comparison is among a certain specified number of items with the smallest value, or that an item under comparison has a value within a specified bottom percentage value. As used herein, being within a threshold means that a value for an item under comparison is between two specified other values, that an item under comparison is among a middle-specified number of items, or that an item under comparison has a value within a middle-specified percentage range. Relative terms, such as high or unimportant, when not otherwise defined, can be understood as assigning a value and determining how that value compares to an established threshold. For example, the phrase "selecting a fast connection" can be understood to mean selecting a connection that has a value assigned corresponding to its connection speed that is above a threshold.

As used herein, the word "or" refers to any possible permutation of a set of items. For example, the phrase "A, B, or C" refers to at least one of A, B, C, or any combination thereof, such as any of: A; B; C; A and B; A and C; B and C; A, B, and C; or multiple of any item such as A and A; B, B, and C; A, A, B, C, and C; etc.

Although the subject matter has been described in language specific to structural features and/or methodological acts, it is to be understood that the subject matter defined in the appended claims is not necessarily limited to the specific features or acts described above. Specific embodiments and implementations have been described herein for purposes of illustration, but various modifications can be made without deviating from the scope of the embodiments and implementations. The specific features and acts described above are disclosed as example forms of implementing the claims that follow. Accordingly, the embodiments and implementations are not limited except as by the appended claims.

Any patents, patent applications, and other references noted above are incorporated herein by reference. Aspects can be modified, if necessary, to employ the systems, functions, and concepts of the various references described above to provide yet further implementations. If statements or subject matter in a document incorporated by reference conflicts with statements or subject matter of this application, then this application shall control.

## Claims

1. A method for providing an automatic boundary for an artificial reality environment provided by an artificial reality system, the method comprising:
determining a floor plane in a real-world environment;
generating a height map for the real-world environment by detecting multiple heights corresponding to multiple physical objects in the real-world environment, the multiple heights being detected relative to the floor plane; and
automatically generating the boundary for the artificial reality environment by:
determining a consecutive floor area by determining an enclosed area of the floor plane in which a threshold amount of the multiple heights, in the enclosed area, are at a height of the floor plane;
identifying one or more areas of the consecutive floor area having a dimension below a threshold and modifying the consecutive floor area to exclude the one or more identified areas;
scaling the modified consecutive floor area down by a predetermined amount;
carving one or more portions out of the scaled consecutive floor area, where the scaled consecutive floor area encloses one or more detected heights, of the multiple detected heights, that are above a threshold, such that the carved consecutive floor area does not enclose any heights above the threshold; and
determining the boundary, for the artificial reality environment, as the carved consecutive floor area.

2. The method of claim 1, wherein generating the height map includes collapsing, in the height map, one or more heights, that are below a first threshold distance of the floor plane, to the floor plane.

3. The method of claim 1 or claim 2, wherein generating the height map includes excluding one or more heights, that are a second threshold distance above the floor plane, from the height map.

4. The method of any preceding claim , further comprising:
rendering the artificial reality environment, on the artificial reality system, relative to the boundary.

5. The method of any preceding claim, wherein the floor plane is determined by applying a machine learning model to one or more images of the real-world environment.

6. The method of any preceding claim, wherein the determining the consecutive floor area excludes areas that have one or more positive heights relative to the floor plane and excludes areas that have one or more negative heights relative to the floor plane.

7. The method of any preceding claim, further comprising:
displaying, by the artificial reality system, the boundary overlaid on a view of the real-world environment; and
receiving input, via the artificial reality system, to apply a manual adjustment to the boundary, wherein the manual adjustment is for example to move the boundary closer to the artificial reality system or to move the boundary away from the artificial reality system.

8. The method of any preceding claim, wherein the threshold amount of the multiple heights in the enclosed area is all of the multiple heights in the enclosed area.

9. A computer-readable storage medium storing instructions for providing an automatic boundary for an artificial reality environment provided by an artificial reality system, the instructions, when executed by a computing system, cause the computing system to:
determine a floor plane in a real-world environment;
generate a height map for the real-world environment by detecting multiple heights corresponding to multiple physical objects in the real-world environment, the multiple heights being detected relative to the floor plane; and
automatically generate the boundary for the artificial reality environment by:
determining a consecutive floor area by determining an enclosed area of the floor plane in which a threshold amount of the multiple heights, in the enclosed area, are within a threshold height of the floor plane;
identifying one or more areas of the consecutive floor area having a dimension below a threshold and modifying the consecutive floor area to exclude the one or more identified areas; and
determining the boundary, for the artificial reality environment, as the modified consecutive floor area.

10. The computer-readable storage medium of claim 9, wherein the automatically generating the boundary further comprises:
scaling the modified consecutive floor area down by a predetermined amount,
wherein the boundary is determined as the modified and scaled consecutive floor area.

11. The computer-readable storage medium of claim 9 or 10,
wherein the automatically generating the boundary further comprises carving one or more portions out of the modified consecutive floor area where the modified consecutive floor area encloses one or more detected heights, of the multiple detected heights, that are above a threshold, such that the carved consecutive floor area does not enclose any heights above the threshold; and
wherein the boundary is determined as the modified and carved consecutive floor area.

12. The computer-readable storage medium of one of claims 9 to 11 wherein the instructions, when executed by a computing system, further cause the computing system to perform the method of any one of claims 2 to 8.

13. A computing system for providing an automatic boundary for an artificial reality environment provided by an artificial reality system, the computing system comprising:
one or more processors; and
one or more memories storing instructions that, when executed by the one or more processors, cause the computing system to:
determine a floor plane in a real-world environment;
generate a height map for the real-world environment by detecting multiple heights corresponding to multiple physical objects in the real-world environment, the multiple heights being detected relative to the floor plane; and
automatically generate the boundary for the artificial reality environment by:
determining a consecutive floor area by determining an enclosed area of the floor plane in which a threshold amount of the multiple heights, in the enclosed area, are within a threshold height of the floor plane;
identifying one or more areas of the consecutive floor area having a dimension below a threshold and modifying the consecutive floor area to exclude the one or more identified areas; and
determining the boundary, for the artificial reality environment, as the modified consecutive floor area.

14. The computing system of claim 13, wherein the automatically generating the boundary further comprises:
scaling the modified consecutive floor area down by a predetermined amount; and
carving one or more portions out of the scaled consecutive floor area where the scaled consecutive floor area encloses one or more detected heights, of the multiple detected heights, that are above a threshold, such that the carved consecutive floor area does not enclose any heights above the threshold,
wherein the boundary is determined as the modified, scale, and carved consecutive floor area.

15. The computing system of claim 13 or 14, wherein the instructions, when executed by the one or more processors, further cause the computing system to perform the method of any one of claims 2 to 8.
